# EUROPÄISCHE PATENTANMELDUNG

(11) **EP 2 592 327 A1**
(43) Veröffentlichungstag der Anmeldung: **15.05.2013**
(21) Anmeldenummer: 11188615.6
(22) Anmeldetag: 10.11.2011
(51) Int. Cl.: F17C 1/16, F17C 1/06, F17C 1/08

(54) **Speicherbehälter für ein fluides Medium, insbesondere Wasser, Flüssiggas oder dergleichen**

(71) Anmelder: Roth Werke GmbH, 35232 Dautphetal (DE)
(72) Erfinder:
(74) Vertreter: Rohmann, Michael

(57) **Zusammenfassung**

Speicherbehälter für ein fluides Medium, insbesondere für Wasser, Flüssiggas (LPG), Wasserstoff, komprimiertes Erdgas (CNG) oder dergleichen, wobei der Speicherbehälter einen Kunststoffbehälter aufweist. Der Kunststoffbehälter ist außenseitig zumindest größtenteils mit einem Faserverbundmaterial umwickelt, wobei zumindest bereichsweise eine Barriereschicht mit der Maßgabe an dem Kunststoffbehälter angeordnet ist, dass die Diffusion von gasförmigen Komponenten aus dem Kunststoffbehälter und/oder die Diffusion von Gasen in den Kunststoffbehälter vermindert bzw. unterdrückt wird. Der Kunststoffbehälter weist zumindest ein Anschlusselement auf, mit dem das fluide Medium in den Kunststoffbehälter einbringbar bzw. aus dem Kunststoffbehälter entnehmbar ist.

## Beschreibung

Die Erfindung betrifft einen Speicherbehälter für ein fluides Medium, insbesondere für Wasser, Flüssiggas (LPG), Wasserstoff, komprimiertes Erdgas (CNG) oder dergleichen.

Speicherbehälter der vorstehend genannten Art sind aus der Praxis grundsätzlich bekannt. Dabei hat es sich bewährt, diese Speicherbehälter aus einem Metall auszubilden. Diese Metallbehälter weisen jedoch den Nachteil auf, dass sie sehr schwer und dadurch unhandlich sind, wodurch die Montage wesentlich erschwert wird. Weiterhin sind aus der Praxis Kunststoffbehälter bekannt, deren Druckbeständigkeit jedoch nur für einen kleinen Einsatzbereich ausreichend ist. Fernerhin besteht bei den aus der Praxis bekannten Kunststoffbehältern das Problem, dass im laufenden Betrieb Sauerstoff in den Kunststoffbehälter diffundiert und so in dem in dem Kunststoffbehälter aufgenommenen fluiden Medium aufkonzentriert wird. Infolgedessen weist das fluide Medium stark oxidierende Eigenschaften auf, wodurch an den Speicherbehälter angeschlossene Installationen beschädigt werden können.

Der Erfindung liegt das technische Problem zugrunde, einen Speicherbehälter der vorstehend genannten Art anzugeben, der sich durch eine einfache Handhabbarkeit und flexible Einsetzbarkeit auszeichnet und mit dem insbesondere die Anreicherung von Sauerstoff in dem in dem Speicherbehälter aufgenommenen fluiden Medium vermieden wird.

Zur Lösung des technischen Problems lehrt die Erfindung einen Speicherbehälter für ein fluides Medium, insbesondere für Wasser, Flüssiggas (LPG), Wasserstoff, komprimiertes Erdgas (CNG) oder dergleichen, wobei der

Speicherbehälter einen Kunststoffbehälter aufweist, wobei der Kunststoffbehälter außenseitig zumindest größtenteils mit einem Faserverbundmaterial umwickelt ist, wobei zumindest bereichsweise eine Barriereschicht mit der Maßgabe an dem Kunststoffbehälter angeordnet ist, dass die Diffusion von gasförmigen Komponenten aus dem Kunststoffbehälter und/oder die Diffusion von Gasen in den Kunststoffbehälter vermindert bzw. unterdrückt wird, wobei der Kunststoffbehälter zumindest ein Anschlusselement aufweist, mit dem das fluide Medium in den Kunststoffbehälter einbringbar bzw. aus dem Kunststoffbehälter entnehmbar ist. Bevorzugt unterdrückt die Barriereschicht die Diffusion von korrosiven Gasen in den Kunststoffbehälter. Grundsätzlich ist die Aufnahme gasförmiger oder flüssiger Medien, beispielsweise Wasser, in dem Speicherbehälter möglich. So kann in dem Speicherbehälter auch Flüssiggas, beispielsweise Propangas, gespeichert werden. Der erfindungsgemäße Speicherbehälter kann fernerhin als Druckausgleichsbehälter eingesetzt werden.

Gemäß einer bevorzugten Ausführungsform ist die Barriereschicht zumindest bereichsweise zwischen einer außenseitigen Oberfläche des Kunststoffbehälters und dem Faserverbundmaterial angeordnet. Grundsätzlich ist es möglich, dass die Barriereschicht in eine Wandung des Kunststoffbehälters und/oder in das Faserverbundmaterial integriert ist. Weiterhin ist es möglich, dass die Barriereschicht auf einer dem Kunststoffbehälter abgewandten Oberfläche des Faserverbundmaterials bzw. einer Schicht aus dem Faserverbundmaterial angeordnet ist.

Vorzugsweise verfügt der Kunststoffbehälter (Inliner) des Speicherbehälters über ein Volumen von 10l bis 300l. Grundsätzlich ist es möglich, dass der Kunststoffbehälter noch größere Volumina aufweist. Es empfiehlt sich, dass der Speicherbehälter Druckbelastungen von bis zu 60 bar widersteht. Vorzugsweise ist der erfindungsgemäße Speicherbehälter für einen Betrieb bei einem Druck von 3 bis 60 bar ausgelegt. Es liegt im Rahmen der Erfindung, dass der Kunststoffbehälter aus einem thermoplastischen Kunststoff, zweckmäßigerweise aus einem Polyolefin und bevorzugt aus einem Polypropylen und/oder Polyethylen gefertigt ist. Der Kunststoffbehälter verfügt über eine Wandstärke von zweckmäßigerweise 2 mm bis 6 mm und vorzugsweise von 4 mm bzw. ungefähr 4 mm.

Vorteilhafterweise ist die außenseitige Oberfläche des Kunststoffbehälters vollständig bzw. im Wesentlichen vollständig mit der Barriereschicht bedeckt. Es liegt im Rahmen der Erfindung, dass die Barriereschicht eine Diffusion von polaren und/oder apolaren Komponenten aus dem Kunststoffbehälter vermindert bzw. unterdrückt. Bei solchen apolaren Komponenten handelt es sich beispielsweise um Propan und/oder Butan. Empfohlenermaßen vermindert bzw. unterdrückt die Barriereschicht das Eindiffundieren von Sauerstoff und/oder anderen oxidierenden Gasen in den Kunststoffbehälter bzw. in einen Innenraum des Kunststoffbehälters. Es empfiehlt sich, dass die Barriereschicht unmittelbar und ohne Zwischenschaltung einer weiteren Schicht oder weiterer Schichten auf der außenseitigen Oberfläche des Kunststoffbehälters aufliegt. Gemäß einer bevorzugten Ausführungsform ist die außenseitige Oberfläche der Barriereschicht bzw. die dem Kunststoffbehälter abgewandte Oberfläche der Barriereschicht vollständig bzw. im Wesentlichen vollständig mit dem Faserverbundmaterial bedeckt.

Das Faserverbundmaterial wird im Rahmen der Erfindung von Fasern gebildet, die in eine Kunststoffmatrix eingebettet sind. Als Kunststoffmatrix wird vorzugsweise ein thermoplastischer Kunststoff eingesetzt. Gemäß einer Ausführungsform weist die Barriereschicht und/oder die Schicht aus dem

Faserverbundmaterial bzw. Faserverbundmaterialschicht zumindest eine Ausnehmung auf, durch die das Anschlusselement zugänglich ist.

Vorteilhafterweise verfügt das Anschlusselement über einen Gewindeanschluss, an den weitere Installationen anschließbar sind. Es ist möglich, dass der Speicherbehälter über lediglich ein Anschlusselement verfügt. Vorteilhafterweise verfügt der Speicherbehälter kopfseitig und/oder fußseitig über jeweils zumindest ein Anschlusselement. Fußseitig meint einen Bereich des Speicherbehälters, der im Aufstellzustand dem Boden zugewandt ist. Kopfseitig meint einen dem Fußbereich gegenüber angeordneten Bereich des Speicherbehälters.

Vorzugsweise weist die Barriereschicht zumindest eine Schicht auf, die aus der Gruppe "Metallschicht, Polymerschicht, Lackschicht" ausgewählt ist. Gemäß einer bevorzugten Ausführungsform ist die Barriereschicht eine Metallschicht, wobei die Metallschicht als Folie ausgebildet ist. Es liegt im Rahmen der Erfindung, dass die Barriereschicht formschlüssig auf dem Kunststoffbehälter aufliegt, wobei gemäß einer Ausführungsform die Barriereschicht stoffschlussfrei auf dem Kunststoffbehälter aufliegt. Grundsätzlich ist es möglich, dass die Barriereschicht stoffschlüssig mit dem Kunststoffbehälter verbunden ist. Die Polymerschicht kann beispielsweise aus zumindest einem Polymer aus der Gruppe "Ethylenvinylalkohol (EVOH), Polyolefin, Polyamid, Polyester" bestehen. Grundsätzlich ist es möglich, dass die Lackschicht auf einem Acrylnitril basiert.

Gemäß einer bevorzugten Ausführungsform ist die Barriereschicht eine Metallschicht aus Aluminium, die vorzugsweise auf den Kunststoffbehälter aufgewickelt ist. Es hat sich als vorteilhaft herausgestellt, die Metallschicht durch das Aufwickeln einer Vielzahl benachbarter Windungen der Metallfolie auf dem

Kunststoffbehälter auszubilden. Es ist möglich, dass zwischen der Metallschicht und der Kunststoffbehälteroberfläche eine Haftvermittlerschicht angeordnet ist. Es empfiehlt sich, dass der Haftvermittler auf die dem Kunststoffbehälter zugewandte Oberfläche der Metallfolie aufgetragen ist, um insbesondere das Anwickeln der Metallfolie an den Kunststoffbehälter zu vereinfachen. Zweckmäßigerweise ist die Metallfolie eine selbstklebende Metallfolie.

Vorzugsweise weist die Metallschicht eine Dicke von 20 µm bis 120 µm und bevorzugt von 50 µm bis 100 µm auf. Gemäß einer besonders bevorzugten Ausführungsform weist die Metallschicht in einem Kopfbereich bzw. in einem Fußbereich des Speicherbehälters eine Dicke von 80 µm bis 120 µm und besonders bevorzugt von 100 µm bzw. ungefähr 100 µm auf. Fußbereich meint im Rahmen der Erfindung den Bereich, der im aufgestellten Zustand des Speicherbehälters dem Untergrund bzw. Fußboden zugewandt ist. Der Kopfbereich liegt vorzugsweise dem Fußbereich gegenüber und stellt den oberen Bereich des Kunststoffbehälters dar. Es empfiehlt sich, dass die Metallschicht in einem Mittelteil bzw. Zwischenbereich, das bzw. der zwischen dem Kopfbereich und dem Fußbereich angeordnet ist, eine Dicke von 20 µm bis 70 µm, empfohlenermaßen von 40 µm bis 60 µm und vorzugsweise von 50 µm bzw. ungefähr 50 µm aufweist. Es ist möglich, dass die Barriereschicht eine einheitlich bzw. im Wesentlichen einheitliche Dicke aufweist.

Gemäß einer Ausführungsform enthält das Faserverbundmaterial zumindest 10 Gew.-% bis 50 Gew.-% eines thermoplastischen Kunststoffes und zumindest 50 Gew.-% bis 90 Gew.-% einer Faserart. Empfohlenermaßen ist als Faserart in dem Faserverbundmaterial zumindest eine Faserart enthalten, die aus der Gruppe "Glasfasern, Carbonfasern, Aramidfasern, Hybridfasern aus Carbonfasern und Glasfasern" ausgewählt ist. Besonders bevorzugt sind in dem Faserverbundmaterial lediglich Glasfasern als Faserart enthalten. Der thermoplastische Kunststoff ist vorzugsweise ein Polyolefin und bevorzugt ein Polyethylen und/oder Polypropylen. Es liegt im Rahmen der Erfindung, dass das Faserverbundmaterial 15 Gew.-% bis 50 Gew.-%, vorzugsweise 20 Gew.-% bis 40 Gew.-% und besonders bevorzugt 25 Gew.-% bis 35 Gew.-% des thermoplastischen Kunststoffes enthält. Nach einer besonders bevorzugten Ausführungsform weist das Faserverbundmaterial 30 Gew.-% bzw. ungefähr 30 Gew.-% des thermoplastischen Kunststoffes auf. Vorzugsweise enthält das Faserverbundmaterial 55 Gew.-% bis 85 Gew.-%, zweckmäßigerweise 60 Gew.-% bis 80 Gew.-% und bevorzugt 65 Gew.-% bis 75 Gew.-% der zumindest einen Faserart. Nach einer besonders bevorzugten Ausführungsform der Erfindung enthält das Faserverbundmaterial 70 Gew.-% bzw. ungefähr 70 Gew.-% der Faserart.

Vorteilhafterweise weist die Umwicklung mit dem Faserverbundmaterial bzw. die Faserverbundmaterialschicht eine Schichtdicke von 3 mm bis 20 mm und vorzugsweise von 10 mm bis 20 mm auf. Es empfiehlt sich, dass die Schichtdicke der Faserverbundmaterialschicht in Abhängigkeit des Einsatzbereiches bzw. des Betriebsdrucks des Speicherbehälters eingestellt wird. Empfohlenermaßen beträgt die Schichtdicke bis zu 8 mm und vorzugsweise 4 mm bzw. ungefähr 4 mm, beispielsweise wenn der Innendruck in dem Kunststoffbehälter bis zu 4 bar beträgt. Empfohlenermaßen weist die Faserverbundmaterialschicht eine Dicke von 10 mm bis 20 mm auf, wenn gemäß einer Ausführungsform der Innendruck in dem Kunststoffbehälter bis zu 60 bar beträgt.

Vorteilhafterweise liegt das Faserverbundmaterial unmittelbar und vorzugsweise formschlüssig auf der Barriereschicht auf. Vorteilhafterweise besteht zwischen dem Faserverbundmaterial und der Barriereschicht kein Stoffschluss. Im Falle einer Wiederverwertung bzw. eines Recyclings ist das Faserverbundmaterial problemlos von der Barriereschicht und die Barriereschicht einfach von dem Kunststoffbehälter entfernbar. Durch das einfache Auftrennen der unterschiedlichen Komponenten bzw. Bestandteile des Speicherbehälters ist ein effektives Recycling der eingesetzten Materialien möglich.

Gemäß einer Ausführungsform des erfindungsgemäßen Speicherbehälters weist der Kunststoffbehälter ein zylinderförmiges Mittelteil (Zwischenbereich) auf, dessen stirnseitige Öffnungen von einem kugelschalen- bzw. kalottenförmigen Deckel und von einem kugelschalen- bzw. kalottenförmigen Boden verschlossen sind. Vorzugsweise weist das zylinderförmige Mittelteil einen kreisrunden Querschnitt auf. Es ist möglich, dass der Querschnitt des zylinderförmigen Mittelteils oval ist. Weiterhin ist es möglich, dass das Mittelteil, der Deckel und der Boden einstückig ausgebildet sind. Der Boden bzw. der Deckel bilden im Rahmen der Erfindung jeweils Endbereiche des Kunststoffbehälters, die gemäß einer Ausführungsform jeweils klöppelbodenförmig oder isotensoidförmig ausgebildet sein können. Gemäß einer Ausführungsform sind das Mittelteil, der Deckel und der Boden jeweils als separate Bauteile ausgebildet sind. Vorteilhafterweise sind der Deckel und der Boden fluiddicht beispielsweise mittels einer Schweißverbindung an das Mittelteil angeschlossen.

Gemäß einer bevorzugten Ausführungsform ist auf dem Mittelteil zumindest ein Bandagenelement angeordnet, wobei das Bandagenelement außenseitig auf der Faserverbundmaterialschicht angeordnet ist oder wobei das Bandagenelement zwischen dem Kunststoffbehälter und der Faserverbundmaterialschicht angeordnet ist. Vorzugsweise umläuft das Bandagenelement das Mittelteil vollständig. Durch das Bandagenelement (Bandage) erfährt das Mittelteil bevorzugt eine Stabilisierung, wodurch im Rahmen der Erfindung die Druckbeständigkeit des Kunststoffbehälters erhört wird. Selbst im Falle von Druckschwankungen ist durch das Bandagenelement sichergestellt, dass der Kunststoffbehälter nicht ausgewölbt oder anderweitig deformiert wird. Es ist möglich, dass das Bandagenelement innenseitig bzw. innenraumseitig an das vorzugsweise zylinderförmige Mittelteil des Kunststoffbehälters angeschlossen ist. Vorteilhafterweise ist das innenseitig an das Mittelteil angeschlossene Bandagenelement stoffschlüssig mit dem Mitteilteil verbunden.

Zweckmäßigerweise ist das Bandagenelement aus einem Kunststoff und vorzugsweise aus dem Faserverbundmaterial gebildet. Gemäß einer Ausführungsform ist das Bandagenelement aus einem Polyolefin und vorzugsweise aus einem Polyethylen und/oder Polypropylen gebildet. Grundsätzlich ist es möglich, dass das Bandagenelement mit derselben Wickelmaschine auf den Kunststoffbehälter aufgebracht wird, mit der der Kunststoffbehälter mit dem Faserverbundmaterial umwickelt wird.

In einer bevorzugten Ausführungsform ist in dem zylinderförmigen Mittelteil zumindest eine das zylinderförmige Mittelteil umlaufende Verstärkungssicke angeordnet, in der vorzugsweise das Bandagenelement angeordnet ist. Es empfiehlt sich, dass die Verstärkungssicke vollständig bzw. im Wesentlichen vollständig mit dem Bandagenelement ausgefüllt ist. Auf diese Weise verfügt nach dem Umwickeln des Kunststoffbehälters mit dem Faserverbundmaterial der Speicherbehälter über eine einheitliche Oberfläche. Mit anderen Worten ist bei dieser Ausführungsform des erfindungsgemäßen Speicherbehälters das Bandagenelement für einen Betrachter nicht sichtbar.

Gemäß einer weiteren Ausführungsform ist der Kunststoffbehälter kugelförmig bzw. ungefähr kugelförmig ausgebildet. Es ist möglich, dass der kugelförmig ausgebildete Kunststoffbehälter bandagenelementfrei und/oder verstärkungssickenfrei ausgebildet ist. Der vorzugsweise kugelförmige Kunststoffbehälter verfügt über eine hervorragende Druckbeständigkeit.

Weiterhin lehrt die Erfindung zur Lösung des technischen Problems ein Verfahren zur Herstellung eines Speicherbehälters, wobei ein Kunststoffbehälter bereitgestellt wird, wobei zumindest bereichsweise eine Barriereschicht an dem Kunststoffbehälter angeordnet wird, mit welcher Barriereschicht das Diffundieren von gasförmigen Komponenten aus dem Kunststoffbehälter und das Diffundieren von Gasen in den Kunststoffbehälter vermindert bzw. unterdrückt wird, wobei in einem Wickelvorgang zumindest bereichsweise ein Faserverbundmaterial auf den Kunststoffbehälter gewickelt wird und wobei der Kunststoffbehälter mit zumindest einem Anschlusselement ausgestattet wird. Vorteilhafterweise ist die Barriereschicht unmittelbar auf eine außenseitige Oberfläche des Kunststoffbehälters aufgebracht. Es empfiehlt sich, dass das Faserverbundmaterial vorzugsweise unmittelbar auf die Barriereschicht aufgebracht bzw. gewickelt wird. Gemäß einer bevorzugten Ausführungsform wird der Kunststoffbehälter durch Rotationsformen vorzugsweise durch Spritzgießen und bevorzugt durch Blasformen hergestellt. Vorteilhafterweise ist die außenseitige Oberfläche des Kunststoffbehälters vollständig mit der Barriereschicht bedeckt bzw. im Wesentlichen vollständig mit der Barriereschicht bedeckt. Es empfiehlt sich, dass die Barriereschicht vollständig bzw. im Wesentlichen vollständig von einer von dem Faserverbundmaterial gebildeten Schicht abgedeckt ist.

Zweckmäßigerweise wird der Kunststoffbehälter mit zumindest einem Bandagenelement verstärkt. Es liegt im Rahmen der Erfindung, dass in den Kunststoffbehälter zumindest eine Verstärkungssicke eingeformt wird, in der in einer besonders bevorzugten Ausführungsform das Bandagenelement angeordnet wird.

Es empfiehlt sich, dass die Barriereschicht auf den Kunststoffbehälter entweder aufgewickelt, extrudiert oder gesprüht wird. Besonders vorteilhaft ist, dass die bevorzugt von einer Metallfolie gebildete Barriereschicht auf den Kunststoffbehälter aufgewickelt wird. Es ist möglich, dass eine Polymerschicht auf den Kunststoffbehälter durch Extrusion aufgetragen wird. Gemäß einer weiteren Ausführungsform wird der Kunststoffbehälter mit einem Lack und/oder Polymer besprüht.

Der Erfindung liegt die Erkenntnis zugrunde, dass sich ein erfindungsgemäßer Speicherbehälter durch ein geringes Gewicht, eine einfache Handhabbarkeit und eine hohe Betriebssicherheit auszeichnet. Aufgrund des geringen Gewichts eignet sich ein erfindungsgemäßer Speicherbehälter auch für mobile Einsätze, beispielsweise als mobiles Flüssiggasreservoir. Darüber hinaus kann der erfindungsgemäße Speicherbehälter problemlos für andere Druckanwendungen eingesetzt werden, beispielsweise als Druckausgleichsbehälter. Wesentlich an dem erfindungsgemäßen Speicherbehälter ist darüber hinaus, dass das Diffundieren von gasförmigen Komponenten aus dem Speicherbehälter in die Atmosphäre bzw. von korrosiven Gasen, wie beispielsweise Sauerstoff, in den Speicherbehälter ausgeschlossen, zumindest aber vermindert wird. Auf diese Weise wird eine ungewollte Kontamination der den Speicherbehälter umgebenden Atmosphäre insbesondere mit schadhaften bzw. schädlichen gasförmigen Komponenten unterbunden. In besonders vorteilhafter Weise wird auch die Anreicherung von Sauerstoff in dem erfindungsgemäßen Speicherbehälter ausgeschlossen. Auch bei einem langfristigen Betrieb des erfindungsgemäßen Speicherbehälters ist somit keine besondere Belastung der an den Speicherbehälter angeschlossenen Installationen zu befürchten. Weiterhin liegt der Erfindung die Erkenntnis zugrunde, dass sich ein erfindungsgemäßer Speicherbehälter problemlos und nahezu vollständig wieder verwerten lässt. Durch den erfindungsgemäßen Aufbau des Speicherbehälters ist ein problemloses Trennen der unterschiedlichen Komponenten des Speicherbehälters möglich, die dann separat einer Verwertung zugeführt werden können. Der erfindungsgemäße Speicherbehälter ist darüber hinaus einfach und problemlos herstellbar und zeichnet sich bezüglich seiner Installation und seines Betriebs durch eine besondere Wirtschaftlichkeit aus.

Nachfolgend wird die Erfindung anhand einer lediglich ein Ausführungsbeispiel darstellenden Zeichnung erläutert. Es zeigen in schematischer Darstellung:
- Fig. 1: eine Frontansicht eines erfindungsgemäßen Speicherbehälters in einer ersten Ausführungsform,
- Fig. 2: eine Frontansicht eines erfindungsgemäßen Speicherbehälters in einer zweiten Ausführungsform und
- Fig. 3: eine Frontansicht eines erfindungsgemäßen Speicherbehälters in einer dritten Ausführungsform.

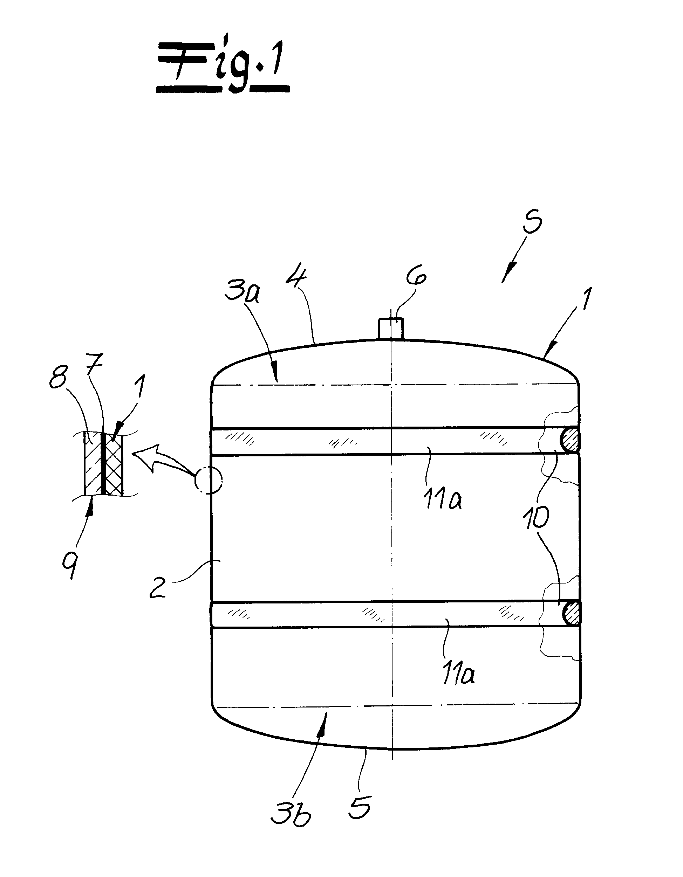

In Fig. 1 ist ein Speicherbehälter S für ein fluides Medium, insbesondere für Wasser, Flüssiggas, Wasserstoff, CNG oder dergleichen, dargestellt. Der Speicherbehälter S weist einen Kunststoffbehälter 1 auf. Dieser Kunststoffbehälter 1 verfügt über ein in dem Ausführungsbeispiel gemäß Fig. 1 ovales Mittelteil 2, das kopfseitig über eine stirnseitige Öffnung 3a und fußseitig über stirnseitige Öffnung 3b verfügt. Die stirnseitige Öffnung 3a ist gemäß Fig. 1 mit einem kugelschalenförmigen Deckel 4 verschlossen. Im Fußbereich ist die stirnseitige Öffnung 3b mit einem kugelschalenförmigen Boden 5 verschlossen. Weiterhin ist in Fig. 1 dargestellt, dass der Kunststoffbehälter 1 ein Anschlusselement 6 aufweist. Nicht dargestellt ist, dass das Anschlusselement 6 einen Gewindeanschluss aufweist.

Der Kunststoffbehälter 1 ist in dem Ausführungsbeispiel gemäß Fig. 1 mit einer Barriereschicht 7 beschichtet, was in den Ausschnittsvergrößerungen dargestellt ist. Die Barriereschicht 7 ist, eine außenseitige Oberfläche des Kunststoffbehälters 1 vollständig abdeckend, mit der Maßgabe aufgetragen, dass das Anschlusselement 6 von außen zugänglich ist. In dem Ausführungsbeispiel gemäß Fig. 1 ist die Barriereschicht als Aluminiumschicht ausgebildet. Der den kugelschalenförmigen Deckel 4 und Boden 5 jeweils abdeckende Bereich der Barriereschicht 7 weist in dem Ausführungsbeispiel eine Dicke von 100 µm auf. Der Bereich der Barriereschicht 7, der auf dem ovalen Mittelteil 2 aufliegt, weist gemäß Fig. 1 eine Dicke von 50 µm auf. Weiterhin ist in der Ausschnittsvergrößerung in Fig. 1 dargestellt, dass der Kunststoffbehälter mit einem Faserverbundmaterial 8 umwickelt ist, wobei die von dem Faserverbundmaterial gebildete Faserverbundmaterialschicht 9 gemäß Fig. 1 eine Schichtdicke von 10 mm aufweist. Die Faserverbundmaterialschicht 9 bedeckt den Kunststoffbehälter in dem Ausführungsbeispiel vollständig. Vorzugsweise und gemäß Fig. 1 ist die Dicke der Faserverbundmaterialschicht 9 über die vollständige Oberfläche des Kunststoffbehälters 2 konstant. Die Faserverbundmaterialschicht 9 liegt gemäß einer bevorzugten Ausführungsform und Fig. 1 unmittelbar auf der Barriereschicht 7 auf, die Barriereschicht 7 liegt unmittelbar auf dem Kunststoffbehälter 1 auf. Der Kunststoffbehälter 1 verfügt gemäß Fig. 1 über eine Wandstärke von 4 mm.

In dem Mittelteil gemäß Fig. 1 sind zwei Verstärkungssicken 10 angeordnet, die das Mittelteil 2 vollständig umlaufen. In den Verstärkungssicken 10 ist jeweils eine Bandage 11a angeordnet. Die Bandage 11a wird von einem Fasermaterial gebildet, das mit dem Faserbundverbundmaterial der Faserverbundmaterialschicht 9 identisch ist.

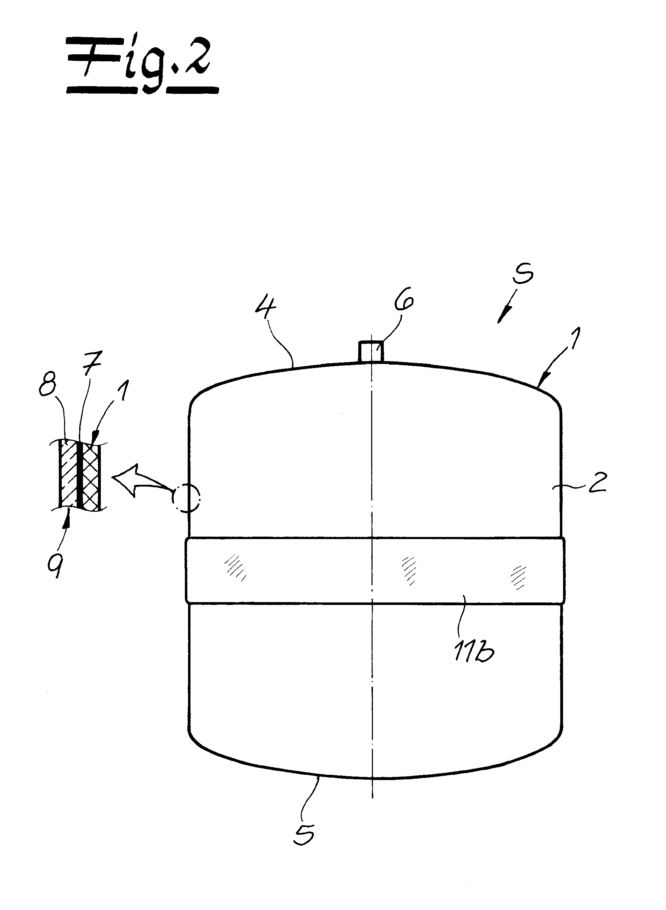

Der Speicherbehälter gemäß Fig. 2 entspricht im Wesentlichen dem Speicherbehälter gemäß Fig. 1. Allerdings ist das Mittelteil 2 des Speicherbehälters S gemäß Fig. 2 sickenfrei ausgebildet. Um das Mittelteil 2 des Kunststoffbehälters 1 gemäß Fig. 2 ist zur Stabilisierung eine Bandage 11 b gelegt, die den Kunststoffbehälter 1 vollständig umläuft bzw. umspannt. Gemäß dem Ausführungsbeispiel nach Fig. 2 ist die Bandage 11 b aus einem Polyethylen gefertigt. Nicht dargestellt ist, dass die Bandage 11 b aus dem Faserverbundmaterial 8 gefertigt sein kann.

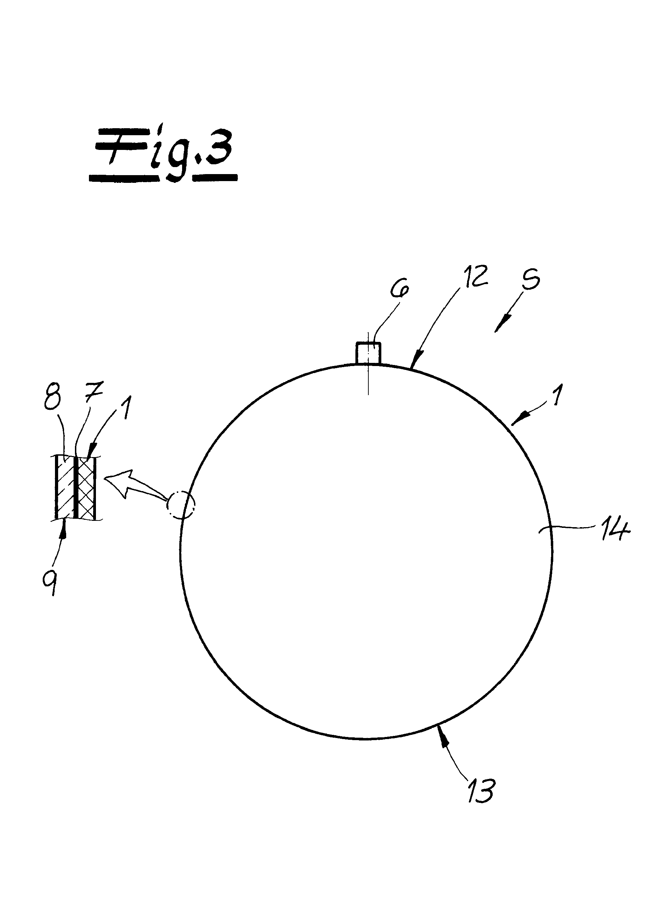

In Fig. 3 ist eine dritte Ausführungsform des erfindungsgemäßen Speicherbehälters S dargestellt. Dieser Speicherbehälter S verfügt über einen kugelförmigen Kunststoffbehälter 1, bei dem in einem Kopfbereich 12 ein Anschlusselement 6 angeordnet ist. Dem Kopfbereich 12 liegt diametral ein Fußbereich 10 gegenüber. Eine außenseitige Oberfläche des Kunststoffbehälters 1 gemäß Fig. 3 ist vollständig von einer Barriereschicht 7 bedeckt. Vorzugsweise und gemäß Fig. 3 weist die Barriereschicht in dem Kopfbereich 12 und in dem Fußbereich 13 eine Dicke von 100 µm auf. In einem Mittelabschnitt 14 verfügt die Barriereschicht 7 über eine Dicke gemäß Fig. 3 von 50 µm. Auch in dem Ausführungsbeispiel gemäß Fig. 3 ist die Barriereschicht 7 eine Metallschicht, die von einer auf die außenseitige Oberfläche des Kunststoffbehälters 1 aufgebrachten Aluminiumfolie gebildet ist.

Weiterhin ist in Fig. 3 dargestellt, dass der Kunststoffbehälter 1 vollständig mit dem Faserverbundmaterial 8 umwickelt ist. Die Dicke der Faserverbundmaterialschicht 9 gemäß Fig. 3 beträgt 10 mm. Die Faserverbundmaterialschicht 9 und die Barriereschicht 7 sind mit der Maßgabe auf der außenseitigen Oberfläche des Kunststoffbehälters 1 angeordnet, dass gemäß Fig. 3 das Anschlusselement 6 von außen zugänglich ist.

## Patentansprüche

1. Speicherbehälter für ein fluides Medium, insbesondere für Wasser, Flüssiggas (LPG), Wasserstoff, komprimiertes Erdgas (CNG) oder dergleichen, wobei der Speicherbehälter (S) einen Kunststoffbehälter (1) aufweist, wobei der Kunststoffbehälter (1) außenseitig zumindest größtenteils mit einem Faserverbundmaterial (8) umwickelt ist, wobei zumindest bereichsweise eine Barriereschicht (7) mit der Maßgabe an dem Kunststoffbehälter angeordnet ist, dass die Diffusion von gasförmigen Komponenten aus dem Kunststoffbehälter (1) und/oder die Diffusion von Gasen in den Kunststoffbehälter (1) vermindert bzw. unterdrückt wird, wobei der Kunststoffbehälter (1) zumindest ein Anschlusselement (6) aufweist, mit dem fluides Medium in den Kunststoffbehälter (1) einbringbar bzw. aus dem Kunststoffbehälter (6) entnehmbar ist.

2. Speicherbehälter nach Anspruch 1 oder 2, wobei die Barriereschicht (7) zumindest bereichsweise zwischen einer außenseitigen Oberfläche des Kunststoffbehälters (1) und dem Faserverbundmaterial (8) angeordnet ist.

3. Speicherbehälter nach Anspruch 1 oder 2, wobei die Barriereschicht (7) zumindest eine Schicht aufweist, die ausgewählt ist aus der Gruppe "Metallschicht, Polymerschicht, Lackschicht".

4. Speicherbehälter nach Anspruch 3, wobei die Metallschicht eine Dicke von 20 µm bis 120 µm aufweist.

5. Speicherbehälter nach einem der Ansprüche 1 bis 4, wobei das Faserverbundmaterial (8) zumindest 10 Gew.-% bis 50 Gew.-% eines thermoplastischen Kunststoffes und zumindest 50 Gew.-% bis 90 Gew.-% einer Faserart enthält, wobei als Faserart zumindest eine Faserart in dem Faserverbundmaterial enthalten ist, welche Faserart aus der Gruppe "Glasfasern, Aramidfasern, Hybridfasern aus einer Kombination von Karbonfasern und Glasfasern" ausgewählt ist.

6. Speicherbehälter nach einem der Ansprüche 1 bis 5, wobei die Umwicklung mit dem Faserverbundmaterial (8) bzw. die Faserverbundmaterialschicht (9) eine Schichtdicke von 3 mm bis 20 mm und vorzugsweise von 10 mm bis 20 mm aufweist.

7. Speicherbehälter nach einem der Ansprüche 1 bis 6, wobei das Faserverbundmaterial (8) unmittelbar und vorzugsweise lediglich formschlüssig auf der Barriereschicht (7) aufliegt.

8. Speicherbehälter nach einem der Ansprüche 1 bis 7, wobei der Kunststoffbehälter (1) ein zylinderförmiges Mitteilteil (2) aufweist, dessen stirnseitige Öffnungen (3a, 3b) von einem kugelschalen- bzw. kalottenförmigen Deckel (4) bzw. von einem kugelschalen- bzw. kalottenförmigen Boden (5) verschlossen sind.

9. Speicherbehälter nach Anspruch 8, wobei auf dem zylinderförmigen Mittelteil (2) zumindest ein Bandagenelement (11a, 11 b) angeordnet ist, wobei das Bandagenelement (11a, 11 b) außenseitig auf der Faserverbundmaterialschicht (9) angeordnet ist oder wobei das Bandagenelement (11a, 11 b) zwischen dem Kunststoffbehälter (1) und der Faserverbundmaterialschicht (9) angeordnet ist.

10. Speicherbehälter nach Anspruch 9, wobei das Bandagenelement (11a, 11 b) aus einem Kunststoff und vorzugsweise aus dem Faserverbundmaterial (8) gebildet ist.

11. Speicherbehälter nach einem der Ansprüche 8 bis 10, wobei in dem zylinderförmigen Mittelteil (2) zumindest eine das zylinderförmige Mittelteil (2) umlaufende Verstärkungssicke (10) angeordnet ist, in der vorzugsweise das Bandagenelement (11a) angeordnet ist.

12. Speicherbehälter nach einem der Ansprüche 1 bis 7, wobei der Kunststoffbehälter (1) kugelförmig bzw. im Wesentlichen kugelförmig ausgebildet ist.

13. Speicherbehälter nach einem der Ansprüche 1 bis 12, wobei der Kunststoffbehälter (1) eine Wandstärke von 3 bis 5 mm aufweist.

14. Verfahren zur Herstellung eines Speicherbehälters, insbesondere nach einem der Ansprüche 1 bis 13, wobei ein Kunststoffbehälter (1) bereitgestellt wird, wobei zumindest bereichsweise eine Barriereschicht (7) an dem Kunststoffbehälter (1) angeordnet wird, mit welcher Barriereschicht (7) das Diffundieren von gasförmigen Komponenten aus dem Kunststoffbehälter (1) und das Diffundieren von Gasen in den Kunststoffbehälter (1) vermindert bzw. unterdrückt wird, wobei in einem Wickelvorgang zumindest bereichsweise ein Faserverbundmaterial (8) auf den Kunststoffbehälter (1) gewickelt wird, und wobei der Kunststoffbehälter (1) mit zumindest einem Anschlusselement (6) ausgestattet wird.

15. Verfahren nach Anspruch 14, wobei die Barriereschicht (7) auf den Kunststoffbehälter entweder aufgewickelt, extrudiert oder gesprüht wird.
